# EUROPÄISCHE PATENTSCHRIFT

(11) **EP 3 600 882 B1**
(45) Veröffentlichungstag und Bekanntmachung des Hinweises auf die Patenterteilung: **19.05.2021**
(21) Anmeldenummer: 18706284.9
(22) Anmeldetag: 27.02.2018
(51) Int. Cl.: B32B 17/10, B65G 47/91, B65G 49/06, B25J 15/06, C03B 23/023, B25B 11/00

(54) **VORRICHTUNG UND VERFAHREN ZUM AUFNEHMEN, VERFORMEN UND ABLEGEN EINER DÜNNEN GLASSCHEIBE**
DEVICE AND METHOD FOR PICKING UP, FORMING AND DEPOSITING A THIN GLASS SHEET
DISPOSITIF ET PROCÉDÉ DE RÉCEPTION, DE FORMAGE ET DE POSE D'UNE VITRE MINCE

(30) Priorität: 22.03.2017 EP 17162208
(43) Veröffentlichungstag der Anmeldung: 05.02.2020
(73) Patentinhaber: SAINT-GOBAIN GLASS FRANCE, 92400 Courbevoie (FR)
(72) Erfinder: GIER, Stephan, 66359 Bous (DE); BORCHMANN, Nikolai, 52134 Herzogenrath (DE); LÜCKE, Stefan, 32139 Spenge (DE)
(74) Vertreter: Lendvai, Tomas
(86) Internationale Anmeldenummer: PCT/EP2018/054783
(87) Internationale Veröffentlichungsnummer: WO 2018/172022

(56) Entgegenhaltungen:
- EP-A1- 3 078 488
- DE-A1-102006 017 763
- DE-A1-102007 031 760
- US-A- 3 046 169
- US-A1- 2013 136 565
- US-A1- 2016 167 894

## Beschreibung

Die Erfindung betrifft eine Vorrichtung und ein Verfahren zum Aufnehmen, Verformen und Ablegen einer dünnen Glasscheibe, insbesondere zum präzisen Ablegen auf einer vorgebogenen dickeren Glasscheibe.

Verbundglasscheiben sind als Fahrzeugverglasungen gebräuchlich, insbesondere als Windschutzscheiben oder Dachscheiben, werden zunehmend aber auch als Seitenscheiben oder Heckscheiben eingesetzt. Sie bestehen aus zwei Glasscheiben, die über eine thermoplastische Zwischenschicht miteinander verbunden sind. Typische Dicken der Glasscheiben in herkömmlichen Verbundglasscheiben betragen etwa 2 mm. Verglasungen im Fahrzeugbereich sind häufig gebogen. Die relativ dicken Einzelglasscheiben herkömmlicher Verbundglasscheiben werden dabei zunächst auf Erweichungstemperatur erhitzt und gebogen. Nach dem Erstarren weisen sie eine formstabile Biegung auf und werden dann zur Verbundglasscheibe laminiert. Um die Form der beiden zu verbindenden Glasscheiben optimal aufeinander abzustimmen, können sie paarweise aufeinanderliegend, simultan kongruent gebogen werden. Solche Biegeverfahren sind beispielsweise aus EP 1 836 136 A1, EP 1 358 131 A1, EP 2 463 247 A1 und EP 2 463 248 A1 bekannt.

Um das Gewicht der Verglasungen zu reduzieren, gibt es Bemühungen, die Dicke der Einzelglasscheiben zu reduzieren, wobei trotzdem die Anforderungen an die Stabilität und Bruchfestigkeit von Fahrzeugscheiben erfüllt werden müssen. So werden vermehrt Verbundglasscheiben vorgeschlagen, die eine dünne Glasscheibe mit einer Dicke von kleiner 1,5 mm oder sogar kleiner 1 mm aufweisen. Lediglich beispielhaft sei dabei auf EP 2 421 704 A1, US 7 070 863 B2, DE 3 919 290 A1, WO 2015/058885 A1, WO 2015/158464 A1 und WO 2016/091435 A1 verwiesen. Zur Steigerung der Stabilität können die dünnen Glasscheiben chemisch vorgespannt sein.

Ein klassisches Biegen der dünnen Glasscheiben ist häufig schwierig. Zum einen sind die dünnen Glasscheiben bei der Handhabung bruchanfällig, zum anderen weisen sie oft chemische Zusammensetzungen mit hohen Erweichungstemperaturen auf, was das Biegen energieintensiv macht. Sollen eine dünne und eine dicke Glasscheibe miteinander laminiert werden, so können sie zudem unterschiedliche Zusammensetzungen aufweisen, wobei für die dicke Glasscheibe das verbreitete und günstige Kalk-Natron-Glas verwendet wird und für die dünne Glasscheibe dagegen eine Glaszusammensetzung, die hinsichtlich der Eignung zum chemischen Vorspannen ausgewählt ist. Die damit einhergehenden unterschiedlichen Erweichungstemperaturen der beiden Scheiben machen ein paarweises Biegen schwierig oder unmöglich.

Dünne Glasscheiben sind allerdings bereits bei Raumtemperatur so flexibel, dass auf das vorhergehende Biegen in eine formstabile Form verzichtet werden kann. Daraus resultieren aber Schwierigkeiten bei der exakten Positionierung der dünnen Glasscheibe auf der vorgebogenen dickeren Glasscheibe. Durch die Vorbiegung ist die Projektionsfläche der dickeren Glasscheibe gegenüber der planen dünnen Glasscheibe verkleinert. Wenn die plane Glasscheibe auf die vorgebogene dicke Glasscheibe aufgelegt wird, steht sie umlaufend über die Seitenkanten der dicken Glasscheibe über. Bei der anschließenden Verformung der dünnen Glasscheibe sollten im Idealfall die Seitenkanten der beiden Glasscheiben exakt aufeinander ausgerichtet sein. Dies ist aber schwierig automatisiert zu bewerkstelligen, weil aufgrund der unterschiedlichen Projektionsflächen ein Roboterarm die ideale Position für die dünne Glasscheibe nicht hinreichend genau bestimmen kann. Da die Seitenkanten der Glasscheiben im Ausgangszustand noch nicht übereinander liegen, ist mit sonst üblichen Positionierungshilfsmitteln, wie beispielsweise mechanischen Tastern, nicht die optimale Präzision erreichbar.

Es besteht also Bedarf an verbesserten Vorrichtungen und Verfahren zur exakten Positionierung einer dünnen Glasscheibe auf einer dickeren Glasscheibe, wobei die dünne und die dickere Glasscheibe im Ausgangszustand unterschiedliche Krümmungen und daher unterschiedliche Projektionsflächen aufweisen. Der vorliegenden Erfindung liegt die Aufgabe zugrunde, eine solche Vorrichtung und ein solches Verfahren bereitzustellen.

Die Aufgabe wird erfindungsgemäß gelöst durch eine Vorrichtung zum Aufnehmen, Verformen und Ablegen einer dünnen Glasscheibe, umfassend ein Gestell mit einer Oberseite und einer Unterseite, wobei die Unterseite dafür vorgesehen und geeignet ist, auf eine Glasscheibe gerichtet zu werden, und mit einer Mehrzahl von Aufnahmestiften versehen ist, die im Wesentlichen parallel zueinander angeordnet sind und deren auf die Glasscheibe gerichtetes Ende mit einem Saugnapf ausgestattet ist, wobei die Aufnahmestifte unabhängig voneinander entlang ihrer Erstreckungsrichtung bewegbar sind, um die Anordnung der Saugnäpfe an eine beabsichtigte Form der Glasscheibe anzupassen. Die Aufgabe wird außerdem gelöst durch ein Verfahren zum Aufnehmen, Verformen und Ablegen einer dünnen Glasscheibe, wobei eine Glasscheibe mit den Saugnäpfen einer erfindungsgemäßen Vorrichtung in Kontakt gebracht und angehoben wird und wobei die Aufnahmestifte derart bewegt werden, dass die Anordnung der Saugnäpfe an eine beabsichtigte Form der Glasscheibe angepasst wird, um die Glasscheibe zu verformen. Die an den Saufnäpfen anhaftende Glasscheibe wird dabei in die beabsichtigte Form gebogen.

Die Vorrichtung und das Verfahren werden im Folgenden gemeinsam vorgestellt, wobei sich die Erläuterungen und bevorzugten Ausgestaltungen gleichermaßen auf Vorrichtung und Verfahren beziehen.

Die beabsichtigte Form der Glasscheibe ist diejenige gekrümmte Form, welche die Glasscheibe am Ende des Prozesses aufweisen soll. Sie kann auch als gewünschte, zu erreichende oder finale Form der Glasscheibe bezeichnet werden und ist durch die lokale Verteilung der Krümmungsradien charakterisiert. Sie entspricht insbesondere (zumindest näherungsweise) der gekrümmten Form der vorgebogenen dickeren Glasscheibe, auf welche die dünne Glasscheibe abgelegt werden soll.

Die Glasscheibe ist eine dünne Glasscheibe, worunter im Sinne der Erfindung eine Glasscheibe mit einer Dicke von weniger als 1 mm verstanden wird. Die Dicke der Glasscheibe beträgt bevorzugt weniger als 0,8 mm. Die Dicke der Glasscheibe kann beispielsweise von 0,2 mm bis 1,0 mm oder von 0,4 mm bis 0,7 mm betragen. Glasscheiben mit diesen Dicken lassen sich gut ohne vorheriges Erwärmen auf Erweichungstemperatur verformen. Die dünne Glasscheibe kann gehärtet oder vorgespannt sein, um ihre Bruchfestigkeit zu erhöhen, was die Handhabung einfacher macht. Da Glasscheiben mit diesen geringen Dicken nicht oder nur sehr schwer thermisch vorgespannt werden können, ist die erste Glasscheibe bevorzugt chemisch vorgespannt. Die Glasscheibe besteht bevorzugt aus einer Glassorte, die sich gut chemisch vorspannen lässt. Die Glasscheibe ist daher bevorzugt aus Aluminosilikatglas gefertigt, insbesondere aus Alkali-Aluminosilikatglas. Das chemische Vorspannen erfolgt durch Austausch kleinerer gegen größere Alkali-Ionen (beispielsweise Natrium- gegen Kaliumionen), wodurch tiefenabhängige Druckspannungen erzeugt werden. Außerdem zeichnet sich diese Glassorte durch hohe Kratzfestigkeit und Härte aus.

Die Glasscheibe ist bevorzugt im Ausgangszustand plan, bevor sie von der erfindungsgemäßen Vorrichtung aufgenommen wird. Grundsätzlich kann die Glasscheibe aber auch vorgebogen sein, wobei sie eine geringere Krümmung aufweist als die beabsichtigte Form, also insbesondere als die dickere Glasscheibe, auf die sie abgelegt werden soll.

Die erfindungsgemäße Vorrichtung verformt die Glasscheibe, bevor sie wieder abgelegt wird. Die Glasscheibe wird in die beabsichtigte Form gebogen. Dadurch wird erreicht, dass die dünne Glasscheibe und die dickere Glasscheibe, mit der sie verbunden werden soll, bereits die gleiche Geometrie und damit Projektionsfläche aufweisen, bevor sie aufeinander gelegt werden. Die Seitenkanten der beiden Glasscheiben können präzise aufeinander ausgerichtet werden und es können Verbundgläser mit einer verbesserten Kantenbündigkeit erzeugt werden, die im Produktionsprozess geringeren Fertigungstoleranzen ausgesetzt sind. Das ist der große Vorteil der vorliegenden Erfindung.

Die erfindungsgemäße Vorrichtung umfasst ein Gestell. Das Gestell weist eine Unterseite und eine Oberseite auf. Die Unterseite kann auch als Unterteil oder unterer Bereich des Gestells bezeichnet werden und die Oberseite als Oberteil oder oberer Bereich. Die Unterseite ist dafür vorgesehen, auf die Glasscheibe ausgerichtet zu werden und ist mit den erfindungsgemäßen Aufnahmestiften versehen. Die Unterseite weist dazu bevorzugt eine vollflächige Abdeckung auf, die mit Bohrungen oder Durchführungen versehen ist, durch welche die Aufnahmestifte geführt sind. Die Aufnahmestifte erstrecken sich also durch die Abdeckung der Unterseite hindurch und sind im Wesentlichen senkrecht dazu angeordnet, wobei ein Ende der Aufnahmestifte dafür vorgesehen und geeignet ist, auf die Glasscheibe gerichtet zu werden und das andere Ende der Aufnahmestifte zur Oberseite des Gestells weist.

Das Gestell ist in einer vorteilhaften Ausgestaltung an einem Roboterarm befestigt. Der Roboterarm ist bevorzugt an der Oberseite des Gestells befestigt. Der Roboterarm kann das Gestell zumindest vertikal aufwärts und abwärts bewegen, um die Glasscheibe aufzuheben und abzulegen, und kann bevorzugt das Gestell bevorzugt auch seitwärts bewegen, um die aufgenommene dünne Glasscheibe über die dickere Glasscheibe zu bewegen. Optional kann der Roboterarm darüber hinaus auch Rotations- oder Kippbewegungen ausführen. Der Roboterarm ist dazu mit entsprechenden Mitteln, die dem Fachmann an sich wohlbekannt sind, ausgestattet.

Alternativ ist es aber auch möglich, die erfindungsgemäße Vorrichtung manuell zu bedienen, entweder vollkommen freihändig oder beispielsweise an einer Aufhängung befestigt.

Die Aufnahmestifte, die auch als Bolzen oder Zylinder bezeichnet werden können, sind im Wesentlichen parallel zueinander angeordnet und über die Unterseite des Gestells verteilt. Sie sind unabhängig voneinander bewegbar entlang ihrer Erstreckungsrichtung. Jeder Aufnahmestift kann also aus dem Gestell heraus und in das Gestell hinein bewegt werden. Durch die unabhängige Bewegbarkeit können die Aufnahmestifte so ausgerichtet werden, dass ihre Saugnäpfe eine Fläche aufspannen, die der beabsichtigten gekrümmten Geometrie der Glasscheibe im Endzustand entspricht. Die gleiche Vorrichtung kann zur Verarbeitung verschiedener Glasscheibentypen eingesetzt werden, weil grundsätzlich jede Scheibengeometrie mit den unabhängig bewegbaren Aufnahmestiften nachgebildet werden kann. Es ist nicht nötig, dass alle vorhandenen Aufnahmestifte einer Vorrichtung bei der Bearbeitung eines bestimmten Scheibentyps verwendet werden. Stattdessen kann eine Vorrichtung gleichsam als Universalwerkzeug mit einer ausreichenden Anzahl an Aufnahmestiften und einer ausreichend großen Wirkfläche ausgebildet sein, um auch die größten und komplexesten Scheibentypen verarbeiten zu können, wobei bei der Bearbeitung von kleineren und/oder weniger komplex gebogenen Scheiben lediglich ein Teil der Aufnahmestifte zum Einsatz kommt.

Die Aufnahmestifte können über die gesamte Fläche der Glasscheibe verteilt sein. Es kann abhängig vom Scheibentyp aber auch ausreichen, wenn die Aufnahmestifte lediglich rahmenartig im peripheren Randbereich der Glasscheibe angreifen.

Die Anzahl und die Abstände der Aufnahmestifte kann vom Fachmann gemäß der Komplexität der Scheibenbiegung geeignet gewählt werden. So sind bei Scheiben mit relativ einfacher Biegung wenige Aufnahmestifte ausreichend, während komplexere Biegungen mit kleinen lokalen Krümmungsradien und einer Mehrzahl unterschiedlich gekrümmter Bereiche durch eine größere Anzahl von Aufnahmestifte realisiert werden können. Bevorzugt sollte die Vorrichtung mindestens 3 Aufnahmestifte aufweisen. Der Abstand benachbarter Aufnahmestifte beträgt bevorzugt von 50 mm bis 200 mm. Die Aufnahmestifte weisen bevorzugt einen Durchmesser von mindestens 5 mm auf, beispielsweise von 8 mm bis 15 mm.

Der Kontakt zur Glasscheibe wird mit den Saugnäpfen an den Enden der Aufnahmestifte hergestellt. Die Saugnäpfe weisen typischerweise eine Wirkfläche von 0,7 cm² bis 30 cm² auf und sind beispielsweise aus Gummi gefertigt. In einer vorteilhaften Ausgestaltung wird die Glasscheibe mittels eines Unterdrucks an die Saugnäpfe angesaugt. Die Vorrichtung ist dazu mit einem Mittel zur Erzeugung eines Unterdrucks ausgestattet, beispielsweise einer Vakuumpumpe oder Venturi-Düsen, das über Leitungen mit den Saugnäpfen verbunden ist. In einer besonders vorteilhaften Ausgestaltung verlaufen die Leitungen durch das Innere der Aufnahmestifte, welche dazu bevorzugt hohl ausgebildet sind. Die Leitung, die beispielsweise mittels eines Schlauchs ausgebildet ist, kann beispielsweise im oberen Bereich des Aufnahmestifts seitlich aus diesem herausgeführt werden. Es ist aber ebenso möglich, die Leitung außerhalb des Aufnahmestifts zum Saugnapf zu führen.

Die Bewegung der Aufnahmestifte kann auf unterschiedliche Arten realisiert werden. In einer ersten vorteilhaften Ausgestaltung sind die Aufnahmestifte mit Federn versehen. Die Federn sind bevorzugt im Inneren des Gestells an der Unterseite angeordnet und mit dem im Inneren des Gestells befindlichen Teil der Aufnahmestifte verbunden, so dass die Aufnahmestifte durch die Federkraft in das Gestell hinein, also nach oben, gedrückt werden. Jedem Aufnahmestift ist eine Feder zugeordnet. Die Federn können dazu beispielsweise an einem Kragen am oder in der Nähe des von der Glasscheibe abgewandten Endes der Aufnahmestifte angreifen. Die Vorrichtung umfasst außerdem eine Modellform im Inneren des Gestells. Die beabsichtigte, an die finale Form der Glasscheibe angepasste Anordnung der Saugnäpfe wird dadurch erreicht, dass von der Glasscheibe abgewandten Enden der Aufnahmestifte im Inneren des Gestells mit der Modellform in Kontakt stehen, wodurch die Aufnahmestifte entgegen der Federkraft der Federn nach unten aus dem Gestell heraus gedrückt (ausgelenkt) und gehalten werden. Die Aufnahmestifte werden also durch die Modellform bewegt und nehmen die beabsichtigte Anordnung ein, ohne dass die Bewegung extern gesteuert werden muss, beispielsweise mittels einer Software.

Die Oberfläche der Modellform ist bevorzugt gekrümmt. In einer vorteilhaften Ausgestaltung entspricht die gekrümmte Form der Modellform im Wesentlichen der beabsichtigten Form der Glasscheibe und alle Aufnahmestifte weisen im Wesentlichen die gleiche Länge auf. Die gekrümmte Form der Modellform wird dadurch gleichsam auf die von den Saugnäpfen aufgespannte Fläche kopiert. Durch Verwendung der geeigneten Modellform ist die Vorrichtung universell für alle Scheibentypen einsetzbar.

Die von der Glasscheibe abgewandten, zur Modellform hingewandten Enden der Aufnahmestifte sind bevorzugt abgerundet ausgebildet, insbesondere im Wesentlichen sphärisch, um nur einen punktuellen Kontakt zur Modellform herzustellen. Der Kontakt ist besonders schonend, wenn die zur Modellform hingewandten Enden mit Rollen, insbesondere Kugelrollen ausgestattet sind.

In einer ersten bevorzugten Variante der ersten Ausgestaltung ist die Modellform eine Hohloder Massivform, die an der Oberseite des Gestells befestigt ist. Die Modellform kann beispielsweise aus Stahl, Aluminium, anderen Metallen oder auch aus Holz oder Kunststoff gefertigt sein. Zum Tausch der Modellform lässt sich das Gestell bevorzugt öffnen. Das Oberteil und das Unterteil des Gestells können dazu gegeneinander bewegt werden, so dass ihr Abstand vergrößert werden kann, um die Aufnahmestifte von der Modellform zu lösen und die Modellform zugänglich zu machen.

In einer zweiten bevorzugten Variante der ersten Ausgestaltung ist die Modellform eine Scheibe, insbesondere eine Glasscheibe. Die Modellform kann beispielsweise eine einzelne gebogene Glasscheibe sein oder ein Glaslaminat. Die Glasscheibe hat bevorzugt eine Dicke von mindestens 1,5 mm. Die Glasscheibe weist insbesondere die beabsichtigte Form der zu bearbeitenden dünnen Glasscheibe auf. Die Glasscheibe ist bevorzugt zwischen den Aufnahmestiften und einer Mehrzahl von Haltestiften eingespannt, die an der Oberseite des Gestells angeordnet und ebenfalls mit Federn versehen sind. Die Federn sind bevorzugt im Inneren des Gestells an der Oberseite angeordnet und mit dem im Inneren des Gestells befindlichen Teil der Haltestifte verbunden, so dass die Haltestifte durch die Federkraft in das Gestell hinein, also nach unten, gedrückt werden. Die Haltestifte stehen mit der dem Oberteil des Gestells zugewandten Hauptfläche der Modellform-Scheibe in Kontakt, die Aufnahmestifte mit der dem Unterteil zugewandten Hauptfläche. Die gekrümmte Form der dem Unterteil zugewandten Hauptfläche wird durch die Aufnahmestifte gleichsam auf die von den Saugnäpfen aufgespannte Fläche kopiert.

Zum Wechsel der Modellform kann sich das Gestell öffnen lassen, wie im Zusammenhang mit der ersten Variante der ersten Ausgestaltung beschrieben. Alternativ kann das Gestell mit mindestens einer seitlichen Öffnung ausgebildet sein, durch welche die Modellform entnommen beziehungsweise eingeführt werden kann. Die der Modellform zugewandten Enden der Aufnahmestifte und der Haltestifte sind bevorzugt mit Rollen, insbesondere Kugelrollen ausgestattet, um die Modellform schonend herausziehen beziehungsweise hineinstecken zu können.

In einer zweiten vorteilhaften Ausgestaltung sind die Aufnahmestifte mit Motoren ausgestattet, mittels derer sie entlang ihrer Erstreckungsrichtung bewegt werden können. Die Motoren sind beispielsweise im Inneren des Gestells an der Unterseite befestigt und können die Aufnahmestifte, die dazu bevorzugt mit Gewinden oder einem Linearantrieb ausgestattet sind, verschieben. Jeder Aufnahmestift ist einem Motor zugeordnet. Die Bewegung der Aufnahmestifte durch die Motoren wird bevorzugt gesteuert durch eine Software, in welche die beabsichtigte Scheibenform eingegeben werden kann, um die Aufnahmestifte entsprechend zu bewegen.

Die von den Saugnäpfen aufgespannte Fläche in der finalen Anordnung der Aufnahmestifte ist bei allen Ausgestaltungen der Vorrichtung, in Blickrichtung auf die Unterseite des Gestells betrachtet, bevorzugt konvex ausgebildet. Folglich ist auch die von den Aufnahmestiften kontaktierte Oberfläche der Modellform, sofern eine solche verwendet wird, konvex ausgebildet. Grundsätzlich können die besagten Flächen aber auch konkav ausgebildet sein oder konkave und konvexe Bereiche aufweisen. Die hohe Flexibilität hinsichtlich der beabsichtigten Geometrie ist ein großer Vorteil der Erfindung.

Es sind verschiedene Ausführungen des erfindungsgemäßen Verfahrens denkbar. In einer ersten vorteilhaften Ausführungsform wird die Glasscheibe zunächst mit den Saugnäpfen der Aufnahmestifte aufgenommen und die Aufnahmestifte werden anschließend bewegt, wobei die Glasscheibe verformt wird. Die Glasscheibe ist im Ausgangszustand bevorzugt plan oder weist eine Krümmung auf, die jedoch weniger ausgeprägt ist als die beabsichtigte finale Krümmung. Die Glasscheibe wird dann mit den Saugnäpfen in Kontakt gebracht. Die Anordnung der Aufnahmestifte ist dabei an die Ausgangsform der Glasscheibe angepasst und die Saugnäpfe spannen bevorzugt eine plane Fläche auf. Die Glasscheibe wird dann angehoben und anschließend werden die Aufnahmestifte in die finale Stellung bewegt, wobei die Glasscheibe in die beabsichtigte Form gebogen wird. Die Glasscheibe wird dann im gebogenen Zustand abgelegt.

Die Bewegung der Aufnahmestifte in die beabsichtigte Position nach dem Aufnehmen der Scheibe kann sowohl mit der ersten als auch mit der zweiten vorteilhaften Ausgestaltung der erfindungsgemäßen Vorrichtung durchgeführt werden. Bei der ersten vorteilhaften Ausgestaltung mit der Modellform kann die dünne Glasscheibe im geöffneten Zustand des Gestells aufgenommen werden. Im geöffneten Zustand berühren die Aufnahmestifte die Modellform nicht und sind daher im Ausgangszustand, bei dem die Saugnäpfe eine plane Fläche aufspannen. Ist die Glasscheibe aufgenommen, so wird die Form geschlossen, wodurch die Modellform die Aufnahmestifte auslenkt und die Glasscheibe entsprechend verformt. Bei der zweiten vorteilhaften Ausgestaltung sind die Aufnahmestifte mit Motoren ausgestattet, die nach dem Aufnehmen der Scheibe aktiviert werden, um die Aufnahmestifte zu bewegen.

In einer zweiten vorteilhaften Ausführungsform werden die Aufnahmestifte zunächst in die finale Stellung bewegt, so dass die Anordnung der Saugnäpfe an die finale Form der Glasscheibe angepasst wird. Die dünne Glasscheibe wird mit den Aufnahmestiften in der finalen Stellung aufgenommen und beim Aufnehmen verformt und in die beabsichtigte Form gebogen. Das Gestell führt dabei bevorzugt eine rollende Bewegung aus, wobei die Glasscheibe sukzessive mit einer steigenden Anzahl an Aufnahmestiften in Kontakt gebracht wird. Die rollende Bewegung geht bevorzugt von einer Seitenkante der dünnen Glasscheibe aus, insbesondere derjenigen Seitenkante, deren exakte Ausrichtung beim Ablegen am kritischsten ist. Das Gestell wird mittels des Roboterarms gedreht, so dass beim Absenken diejenigen Aufnahmestifte mit dem geringsten Abstand zur besagten Seitenkante mit der Scheibe in Kontakt kommen. Das Gestell führt dann eine Rotationsbewegung aus, so dass Aufnahmestifte mit größerem Abstand zur besagten Seitenkante auf die Glasscheibe abgesenkt werden. Die bereits mit Saugnäpfen versehen Bereiche der Glasscheibe mit geringerem Abstand zur besagten Seitenkante werden dabei von der Unterlage abgehoben und verformt. Bei der zweiten Ausführungsform muss die Vorrichtung vor Beginn einer Produktionsserie nur einmal eingestellt werden. Anschließend müssen die Aufnahmestifte nicht mehr bewegt werden. Ist das Gestell an einem Roboterarm befestigt, so ist dieser zu einer Rotationsbewegung befähigt, um die rollende Bewegung des Gestells auszuführen.

Beim Ablegen der Glasscheibe muss sie von den Saugnäpfen getrennt werden. Das kann beispielsweise manuell geschehen oder durch eine automatisierte Belüftung der Saugnäpfe. In einer bevorzugten Ausgestaltung wird die Scheibenoberfläche mit einem Gasstrom, insbesondere Druckluft beaufschlagt und damit von den Saugnäpfen abgelöst. Die Vorrichtung ist daher bevorzugt mit Mitteln zur Erzeugung eines Gasstroms ausgestattet und mit an der Unterseite des Gestells angeordneten Düsen, um den Gasstrom auf die Glasscheibe zu leiten und die Glasscheibe dadurch vom Gestell weg zu drücken.

In einer bevorzugten Ausführung wird die Glasscheibe auf eine thermoplastische Folie abgelegt, welche ihrerseits auf einer zweiten Glasscheibe angeordnet ist. So kann mit hoher Präzision ein Schichtstapel aus zwei Glasscheiben und einer dazwischenliegenden thermoplastischen Folie erzeugt werden, welcher anschließend beispielsweise zu einem Verbundglas verarbeitet werden kann. Die beiden Glasscheiben werden flächig kongruent aufeinander angeordnet. Die thermoplastische Folie ist bevorzugt ebenfalls auf die Form und Größe der Glasscheiben zugeschnitten und wird ebenfalls flächig kongruent mit den Glasscheiben angeordnet. Es ist aber auch möglich, eine thermoplastische Folie zu verwenden, die größer ist als die Glasscheiben und über diese übersteht, und die überstehenden Teile der Folie anschließend umlaufend abzuschneiden.

Die zweite Glasscheibe weist bevorzugt eine größere Dicke auf als die dünne Glasscheibe, die mit der erfindungsgemäßen Vorrichtung bewegt und verformt wird. Die Dicke der zweiten Glasscheibe beträgt mindestens 1,5 mm, beispielsweise von 1,5 mm bis 5 mm. Die zweite Glasscheibe weist bevorzugt bereits die beabsichtigte Form auf, was durch herkömmliche Glasbiegeverfahren, wie Schwerkraftbiegen oder Pressbiegen, erreicht wird. Die zweite Glasscheibe ist bevorzugt aus Kalk-Natron-Glas gefertigt, das als Fensterglas üblich und daher weit verbreitet und vergleichsweise kostengünstig ist. Grundsätzlich kann die zweite Glasscheibe aber auch aus anderen Glassorten gefertigt sein.

Die thermoplastische Folie enthält bevorzugt Polyvinylbutyral (PVB), Ethylvinylacetat (EVA) oder Polyurethan (PU), besonders bevorzugt PVB. Sie weist bevorzugt eine Dicke von 0,2 bis 2 mm auf, insbesondere 0,5 mm bis 1,6 mm.

Im Gegensatz zu einem klassischen Glasbiegeprozess erfolgt das Verformen der Glasscheibe mittels der erfindungsgemäßen Vorrichtung unterhalb ihrer Erweichungstemperatur. Die Glasscheibe wird daher nicht dauerhaft gebogen, sondern lediglich elastisch verformt, wobei sie nach dem Ablegen ohne den formenden Einfluss der Aufnahmestifte wieder ihre ursprüngliche Form annimmt. Das elastische Zurückfedern der dünnen Glasscheibe kann beispielsweise durch vollständige oder teilweise Lamination mit der zweiten Glasscheibe über die thermoplastische Zwischenschicht verhindert werden. Bevorzugt wird der Schichtstapel punktuell erwärmt wird, um die thermoplastische Folie lokal aufzuschmelzen, wodurch die Glasscheiben lokal an der thermoplastischen Folie haften. Dies wird mit Heizmitteln, wie Heizspulen, Heizstiften, Heißluftfönen oder Laserstrahlung, erreicht. Bevorzugt werden mindestens drei, besonders bevorzugt mindestens fünf Stellen punktuell erhitzt, womit die Form der dünnen Glasscheibe stabilisiert werden kann.

Die erfindungsgemäße Vorrichtung kann in einer automatisierten Produktionslinie eingesetzt werden, in der der besagte Schichtstapel erzeugt wird. Die Produktionslinie umfasst bevorzugt drei Transportbänder, wobei mit dem ersten Transportband die zugeschnittene und in die finale Form vorgebogenen dickere Glasscheibe, mit dem zweiten Transportband die kongruent zugeschnittene thermoplastische Folie und mit dem dritten Transportband die kongruent zugeschnittene, aber plane (oder in einem geringerem Maße vorgebogene) dünne Glasscheibe zu einer Assemblierungsstation transportiert werden. Dort können die Glasscheiben und die Zwischenfolie bevorzugt zunächst exakt auf ihren Transportbändern positioniert werden, bevorzugt mit mechanischen Tastern, die insbesondere an mindestens zwei Kanten der Glasscheiben beziehungsweise der Zwischenfolie angreifen. Die Zwischenfolie wird dann mittels eines Roboters auf der dickeren Glasscheibe abgelegt und die dünne Glasscheibe wird mittels eines mit der erfindungsgemäßen Vorrichtung ausgestatteten Roboters auf der Zwischenfolie abgelegt. Der entstandene Schichtstapel wird dann mittels eines Transportbands aus der Assemblierungsstation heraus transportiert, welches bevorzugt eine Fortsetzung des besagten ersten Transportbands ist.

Die Produktionslinie kann alternativ auch nur über zwei Transportbänder für die beiden Glasscheiben verfügen, wobei die zugeschnittene thermoplastische Folie in der Assemblierungsstation manuell aufgelegt wird.

Die Erfindung umfasst außerdem die Verwendung einer erfindungsgemäßen Vorrichtung zum Aufnehmen, Verformen und Ablegen einer Glasscheibe mit einer Dicke von weniger als 1 mm.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Seitenansicht einer Ausgestaltung der erfindungsgemäßen Vorrichtung,
- Fig. 2: eine Seitenansicht einer weiteren Ausgestaltung der erfindungsgemäßen Vorrichtung,
- Fig. 3: eine erfindungsgemäße Vorrichtung bei einer Ausführung des erfindungsgemäßen Verfahrens,
- Fig. 4: eine Seitenansicht einer weiteren Ausgestaltung der erfindungsgemäßen Vorrichtung,
- Fig. 5: die Vorrichtung aus Figur 1 im geöffneten Zustand,
- Fig. 6: eine erfindungsgemäße Vorrichtung bei einer weiteren Ausführung des erfindungsgemäßen Verfahrens,
- Fig. 7: ein herkömmlicher Schichtstapel zur Herstellung einer Verbundscheibe,
- Fig. 8: eine Schichtstapel nach dem erfindungsgemäßen Verfahren,
- Fig. 9: ein Ausführungsbeispiel des erfindungsgemäßen Verfahrens anhand eines Flussdiagramms und
- Fig. 10: ein weiteres Ausführungsbeispiel des erfindungsgemäßen Verfahrens anhand eines Flussdiagramms.

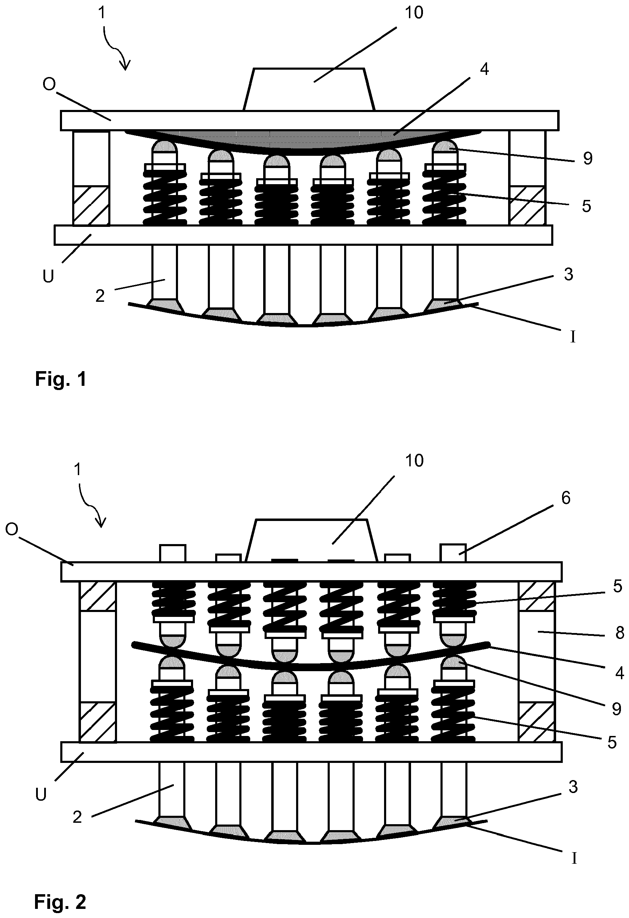

Figur 1 zeigt eine erste Variante einer ersten Ausgestaltung einer erfindungsgemäßen Vorrichtung zum Aufnehmen, Verformen und Ablegen einer dünnen Glasscheibe. Die Vorrichtung umfasst ein Gestell 1 mit einer Oberseite O und einer Unterseite U. Die Oberseite O des Gestells 1 ist mit einem Roboterarm 10 verbunden, mittels dessen das Gestell 1 bewegbar ist. Die Unterseite U des Gestells 1 ist mit Aufnahmestiften 2 ausgestattet, die durch Bohrungen in der Abdeckung der Unterseite U geführt sind. Im Inneren des Gestells befindet sich zu jedem Aufnahmestift 2 eine zugehörige Feder 5, die zwischen der Abdeckung des Gestells 1 und einem Kragen am Aufnahmestift eingespannt ist und den Aufnahmestift nach oben, in das Gestell 1 hinein drückt. An der Oberseite O des Gestells 1 ist eine Modellform 4 befestigt. Die Modellform 4 ist beispielsweise eine Hohlform aus Stahl mit einer nach unten weisenden Oberfläche, deren Krümmung der beabsichtigten Krümmung einer Glasscheibe 1 entspricht, die mit der Vorrichtung aufgenommen und verformt werden soll. Die Aufnahmestifte 2 stehen über Kugelrollen 9 mit der Modellform 4 in Kontakt und werden positionsabhängig durch die Modellform 4 mehr oder weniger weit nach unten gedrückt. Da die Aufnahmestifte 2 alle im Wesentlichen gleich lang sind, spannen die zur Glasscheibe gerichteten Enden der Aufnahmestifte 2 eine Fläche auf, deren Krümmung der Krümmung der Modellform 4 entspricht. Die über Saugnäpfe 3 an den Aufnahmestiften 2 haftende Glasscheibe wird in die beabsichtigte Form gebogen. Die Glasscheibe 1 besteht beispielsweise aus chemisch vorgespanntem Aluminosilikatglas mit einer Dicke von nur 0,7 mm. Die im Ausgangszustand plane Glasscheibe I lässt sich aufgrund ihrer geringen Dicke weit unterhalb ihrer Erweichungstemperatur durch die erfindungsgemäße Vorrichtung elastisch verformen.

Die Oberseite O und die Unterseite U können voneinander entfernt werden, um das Gestell 1 zu öffnen und die Modellform 4 zu tauschen. So kann die gleiche Vorrichtung unter Verwendung verschiedener Modellformen 4 für verschiedene Glasscheibentypen eingesetzt werden.

Figur 2 zeigt eine zweite Variante der ersten Ausgestaltung der erfindungsgemäßen Vorrichtung. Auch hier wird die beabsichtigte Auslenkung der Aufnahmestifte 2 durch eine Modellform 4 erreicht, die hier allerdings als Glasscheibe ausgebildet ist. Die Glasscheibe besteht beispielsweise aus 2 mm dickem Kalk-Natron-Glas und ist klassisch vorgebogen in eine Form, die der beabsichtigten Form der dünnen Glasscheibe I entspricht. Die Modellform 4 ist zwischen die Aufnahmestifte 2 und komplementäre Haltestifte 6 eingespannt. Die Haltestifte 6 sind an der Oberseite O des Gestells 1 befestigt und ebenfalls mit Federn 5 ausgestattet, deren Federkraft derjenigen der Aufnahmestifte 2 entgegengesetzt ist, so dass die Modellform 4 sicher fixiert wird. Jedem Aufnahmestift 2 ist bevorzugt genau ein Haltestift 6 zugeordnet, der gegenüberliegend angeordnet ist, so dass die Modellform 4 keinen Scherkräften ausgesetzt ist, die zum Bruch der als Modellform 4 verwendeten Glasscheibe führen könnten.

Das Gestell weist seitliche Öffnungen 8 auf, über die die Modellform 4 entnommen und ausgetauscht werden kann. So kann die gleiche Vorrichtung für verschiedene Glasscheibentypen eingesetzt werden.

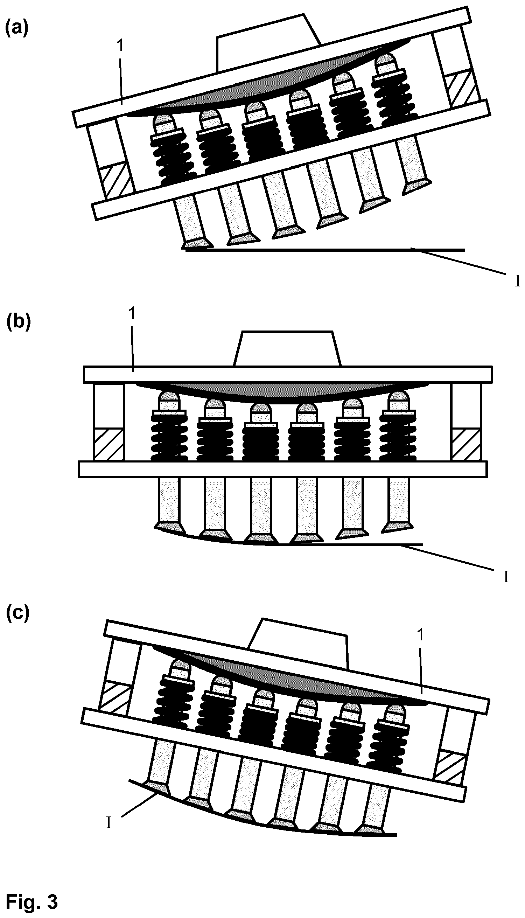

Figur 3 zeigt die Vorrichtung nach Figur 1 beim Aufnehmen der dünnen Glasscheibe I in einer ersten Ausführungsform des erfindungsgemäßen Verfahrens. Die Aufnahmestifte 2 sind bereits zu Beginn mittels der Modellform 4 in ihre finale Position gebracht, wobei die Saugnäpfe 3 eine gekrümmte Fläche aufspannen, die der beabsichtigten Form der Glasscheibe I entspricht. Das Gestell 1 ist geneigt, so dass beim Absenken des Gestells 1 zunächst nur die Aufnahmestifte 2 mit dem geringsten Abstand zu einer Seitenkante der Glasscheibe I mit der Glasscheibe I in Kontakt kommen (Fig. 3a). Der Roboterarm 10 führt dann eine Rotationsbewegung aus, so dass weitere Aufnahmestifte 2 in einer rollenden Bewegung des Gestells 1 mit der Glasscheibe I in Kontakt kommen, wobei die bereits anhaftenden Bereiche der Glasscheibe I angehoben und dabei verformt werden (Fig. 3b). Am Ende der rollenden Bewegung ist das Gestell 1 in der entgegengesetzten Richtung geneigt und alle Saugnäpfe haften an der Glasscheibe I, welche dadurch in die beabsichtigte Form gebogen wird (Fig. 3c).

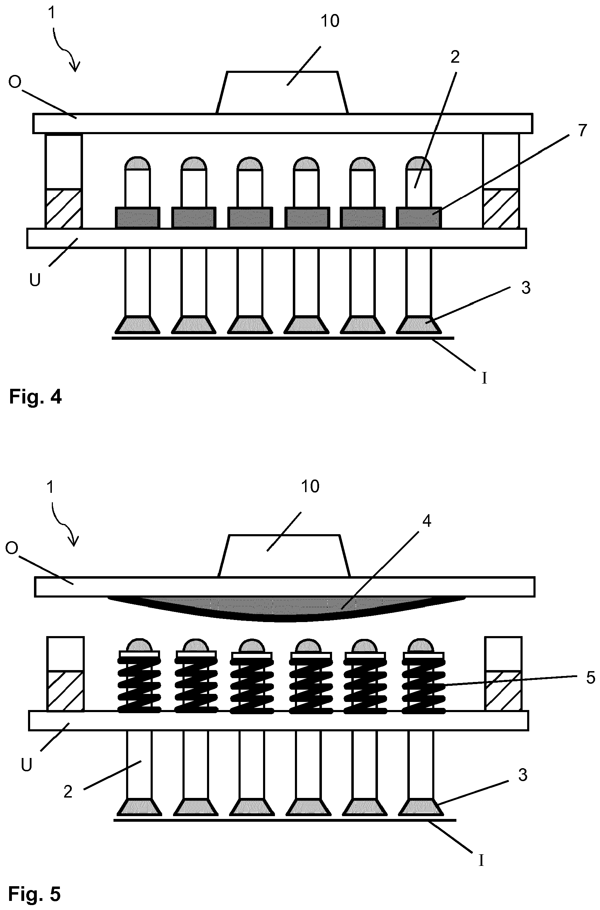

Figur 4 zeigt eine zweite Ausgestaltung der erfindungsgemäßen Vorrichtung. Die Bewegung der Aufnahmestifte 2 erfolgt hier nicht unter Verwendung einer Modellform 4, sondern mittels Motoren 7, die an der Unterseite U des Gestells 1 angebracht sind. Auch hierbei können die Aufnahmestifte 2 bereits zu Beginn in ihre endgültige Position bewegt werden und die Glasscheibe I anschließend gemäß der ersten Ausführungsform aus Figur 3 mit einer rollenden Bewegung aufgenommen werden. Alternativ kann die Glasscheibe I aber auch wie dargestellt gemäß einer zweiten Ausführungsform des Verfahrens aufgenommen werden: dabei spannen die Saugnäpfe 3 zu Beginn eine plane Fläche auf und werden mit der Glasscheibe I in Kontakt gebracht. Die Glasscheibe I kann dann angehoben werden und durch anschließende Bewegung der Aufnahmestifte 2 in die beabsichtigte Form gebogen werden.

Figur 5 zeigt die Vorrichtung der Figur 1 in geöffnetem Zustand. Das Oberteil O des Gestells 1 ist weiter von der Unterseite U beabstandet, so dass die Aufnahmestifte 2 keinen Kontakt zur Modellform 4 haben. Sie befinden sich daher in der unausgelenkten Ausgangsstellung und die Saugnäpfe 3 spannen eine plane Fläche auf, mit der die plane Glasscheibe I aufgenommen werden kann.

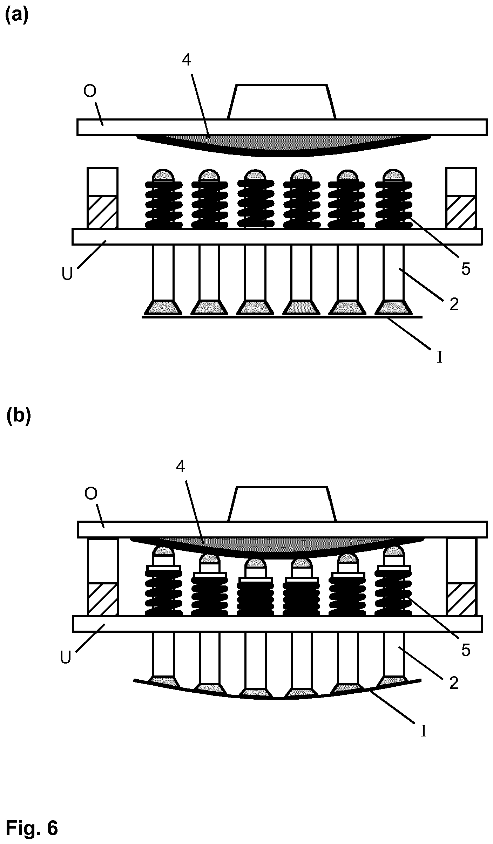

Figur 6 zeigt die Vorrichtung der Figur 5 nach dem Anheben der Glasscheibe I in der zweiten Ausführungsform des erfindungsgemäßen Verfahrens. Die Glasscheibe I ist von der geöffneten Vorrichtung aufgenommen worden (Fig. 6a). Anschließend wird die Vorrichtung geschlossen, indem Oberteil O und Unterteil U einander maximal angenähert werden. Dabei werden die Aufnahmestifte 2 durch den Kontakt mit der Modellform 4 positionsabhängig nach unten gedrückt, so dass die anhaftende Glasscheibe I verformt wird.

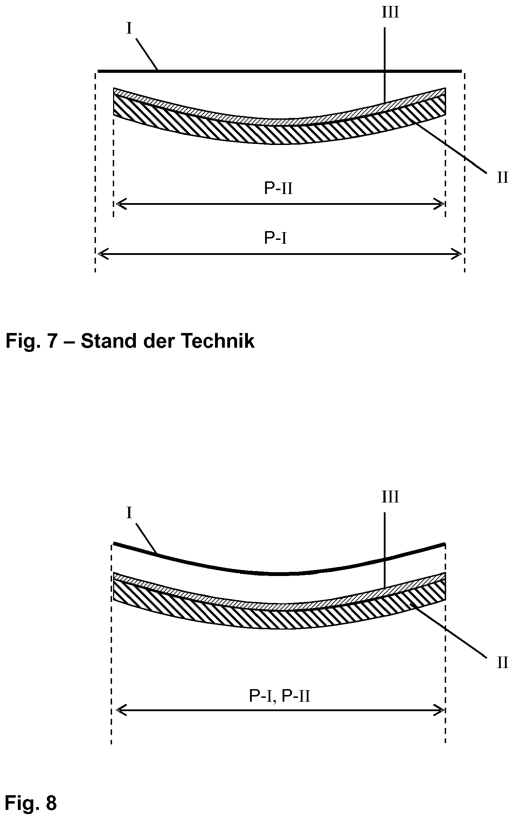

Figur 7 demonstriert die Schwierigkeiten beim herkömmlichen Anordnen eines Schichtstapels aus einer planen dünnen Glasscheibe I und einer vorgebogenen dickeren zweiten Glasscheibe II mit zwischenliegender thermoplastischer Zwischenschicht III. Die zweite Glasscheibe II ist beispielsweise eine 2,1 mm dicke Scheibe aus Kalk-Natron-Glas, die klassisch oberhalb ihrer Erweichungstemperatur vorgebogen wurde in die finale Form, beispielsweise mittels Pressbiegen. Die thermoplastische Zwischenschicht III ist beispielsweise eine 0,76 mm dicke PVB-Folie, die kongruent zugeschnitten und flächig deckend auf die zweite Glasscheibe II aufgelegt wurde. Die dünne Glasscheibe I ist beispielsweise eine nur 0,55 mm dicke, chemisch vorgespannte Scheibe aus Aluminosilikatglas, die ausreichend flexibel ist, dass auf ein klassisches Vorbiegen verzichtet werden kann. Stattdessen kann die Glasscheibe I bei Umgebungstemperatur durch Druck an die Form der zweiten Glasscheibe II angepasst werden und der Schichtstapel anschließend beispielsweise zu einem Verbundglas laminiert werden.

Die beiden Glasscheiben I und II sind sowohl im planen Ausgangszustand als auch im gebogenen Endzustand etwa kongruent, wobei die Glasscheiben im Ausgangszustand eine geringfügig unterschiedliche Größe aufweisen können, um systematisch durch die Biegung verursachte Verschiebung der Seitenkanten gegeneinander zu kompensieren. Da die zweite Glasscheibe II allerdings vorgebogen ist, ist ihre Projektionsfläche P-II gegenüber der Projektionsfläche P-I der ersten Glasscheibe I verkleinert. Dadurch können die beiden Glasscheiben I und II nicht mit der nötigen Präzision aufeinander angeordnet werden, so dass die Seitenkanten im Endzustand häufig nicht perfekt bündig sind und so dass im Rahmen einer Fertigungsserie eine große Streuung hinsichtlich der Bündigkeit auftritt.

Figur 8 demonstriert demgegenüber den Vorteil der vorliegenden Erfindung. Da die erfindungsgemäße Vorrichtung die dünne Glasscheibe I nicht lediglich anhebt und auf den Schichtstapel ablegt, sondern vor dem Ablegen bereits in die finale Form biegt, sind die beiden Projektionsflächen P-I, P-II der Glasscheiben I, II gleich. Sie können daher mit höherer Präzision aufeinander ausgerichtet werden, beispielsweise automatisiert mittels mechanischer Tastvorrichtungen oder mittels optischer Positionsmessungen. Die Bündigkeit der Seitenkanten wird signifikant verbessert.

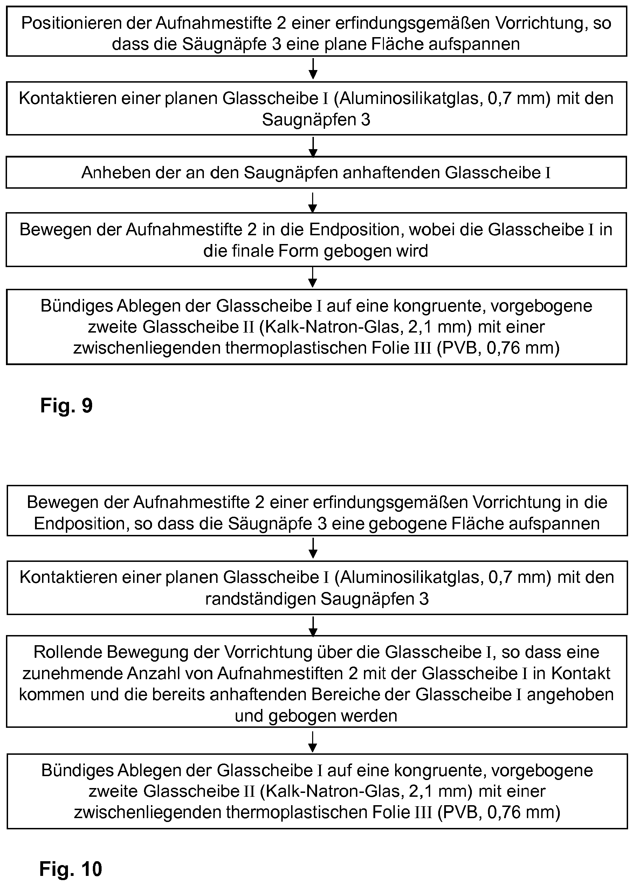

Figur 9 und Figur 10 zeigen Beispiele zweier Ausführungsformen des erfindungsgemäßen Verfahrens anhand eines Flussdiagramms.

### Bezugszeichenliste:

- (I): dünne Glasscheibe
- (II): zweite, dickere Glasscheibe
- (III): thermoplastische Folie

- (1): Gestell
- (2): Aufnahmestift
- (3): Saugnapf
- (4): Modellform
- (5): Feder
- (6): Haltestift
- (7): Motor
- (8): seitliche Öffnung des Gestells 1
- (9): Kugelrolle

- (10): Roboterarm

- (U): Unterseite des Gestells 1
- (O): Oberseite des Gestells 1

- P-1: Projektion der dünnen Glasscheibe 1
- P-II: Projektion der zweiten Glasscheibe II

## Patentansprüche

1. Vorrichtung zum Aufnehmen, Verformen und Ablegen einer dünnen Glasscheibe, umfassend ein Gestell (1) mit einer Oberseite (O) und einer Unterseite (U), die geeignet ist, auf eine Glasscheibe (I) mit einer Dicke von weniger als 1 mm gerichtet zu werden, und die mit einer Mehrzahl von Aufnahmestiften (2) versehen ist, die im Wesentlichen parallel zueinander angeordnet sind und deren auf die Glasscheibe (I) gerichtetes Ende mit einem Saugnapf (3) ausgestattet ist,
wobei die Aufnahmestifte (2) unabhängig voneinander entlang ihrer Erstreckungsrichtung bewegbar sind, um die Anordnung der Saugnäpfe (3) an eine beabsichtigte Form der Glasscheibe (I) anzupassen.

2. Vorrichtung nach Anspruch 1, wobei die Aufnahmestifte (2) mit Motoren (7) versehen sind, mittels derer die Aufnahmestifte (2) entlang ihrer Erstreckungsrichtung bewegt werden können.

3. Vorrichtung nach Anspruch 1, wobei die Aufnahmestifte (2) mit Federn (5) versehen sind und die von der Glasscheibe (I) abgewandten Enden der Aufnahmestifte (2) mit einer Modellform (4) in Kontakt stehen, wodurch die Aufnahmestifte (2) entgegen der Federkraft der Federn (5) gehalten werden.

4. Vorrichtung nach Anspruch 3, wobei alle Aufnahmestifte (2) im Wesentlichen die gleiche Länge aufweisen und die Form der Modellform (4) im Wesentlichen der beabsichtigten Form der Glasscheibe (I) entspricht.

5. Vorrichtung nach Anspruch 3 oder 4, wobei die Modellform (4) eine Scheibe ist, die zwischen den Aufnahmestiften (2) und an der Oberseite (O) des Gestells (1) angeordneten, mit Federn (5) ausgestatteten Haltestiften (6) gehalten wird.

6. Vorrichtung nach Anspruch 5, wobei das Gestell (1) über eine seitliche Öffnung (8) verfügt, durch die die Modellform (4) entnommen werden kann.

7. Vorrichtung nach Anspruch 3 oder 4, wobei die Modellform (4) an der Oberseite (O) des Gestells (1) befestigt ist.

8. Vorrichtung nach einem der Ansprüche 3 bis 6, wobei die Oberseite (O) und die Unterseite (U) des Gestells (1) gegeneinander bewegbar sind, wodurch das Gestell (1) geöffnet werden kann, um die Modellform (4) zu wechseln.

9. Vorrichtung nach einem der Ansprüche 1 bis 7, wobei das Gestell (1) an einem Roboterarm (10) befestigt ist.

10. Verfahren zum Aufnehmen, Verformen und Ablegen einer dünnen Glasscheibe, wobei eine Glasscheibe (I) mit einer Dicke von weniger als 1 mm mit den Saugnäpfen (3) einer Vorrichtung nach einem der Ansprüche 1 bis 9 in Kontakt gebracht und angehoben wird und wobei die Aufnahmestifte (2) derart bewegt werden, dass die Anordnung der Saugnäpfe (3) an eine beabsichtigte Form der Glasscheibe (I) angepasst wird, um die Glasscheibe (I) zu verformen.

11. Verfahren nach Anspruch 10, wobei die Glasscheibe (I) zunächst mit den Saugnäpfen (3) aufgenommen wird und die Aufnahmestifte (2) anschließend bewegt werden, wobei die Glasscheibe (I) verformt wird.

12. Verfahren nach Anspruch 10, wobei die Aufnahmestifte (2) zunächst bewegt werden, so dass die Anordnung der Saugnäpfe (3) an die beabsichtigte Form der Glasscheibe (I) angepasst wird, und wobei die Glasscheibe (I) anschließend mit einer rollenden Bewegung mit den Saugnäpfen (3) aufgenommen wird, wobei die Glasscheibe (I) verformt wird.

13. Verfahren nach einem der Ansprüche 10 bis 12, wobei die Glasscheibe (I) auf eine thermoplastische Folie (III) abgelegt wird, die auf einer zweiten Glasscheibe (II) mit einer Dicke von mindestens 1,5 mm angeordnet ist.

14. Verfahren nach Anspruch 13, wobei die zweite Glasscheibe (II) anschließend punktuell erwärmt wird, um die thermoplastische Folie (III) lokal zu schmelzen, wodurch die Glasscheibe (I) und die zweite Glasscheibe (II) lokal an der thermoplastischen Folie (III) haften.

15. Verfahren nach einem der Ansprüche 10 bis 14, wobei die Glasscheibe (I) beim Ablegen mittels Druckluft von den Saugnäpfen (3) getrennt wird.

## Claims

1. Device for picking up, shaping, and placing a thin glass pane, comprising a frame (1) with an upper side (O) and a lower side (U), which is suitable to be directed onto a glass pane (I) with a thickness of less than 1 mm and which is provided with a plurality of picking up pins (2) that are arranged substantially parallel to one another and whose end directed onto the glass pane (I) is equipped with a suction cup (3),
wherein the picking up pins (2) are movable along their direction of extension independent of one another in order to adapt the arrangement of the suction cups (3) to an intended shape of the glass pane (I).

2. Device according to claim 1, wherein the picking up pins (2) are provided with motors (7), by means of which the picking up pins (2) can be moved along their direction of extension.

3. Device according to claim 1, wherein the picking up pins (2) are provided with springs (5) and the ends of the picking up pins (2) facing away from the glass pane (I) are in contact with a model mold (4), as a result of which the picking up pins (2) are held against the spring force of the springs (5).

4. Device according to claim 3, wherein all the picking up pins (2) have substantially the same length and the shape of the model mold (4) substantially corresponds to the intended shape of the glass pane (I).

5. Device according to claim 3 or 4, wherein the model mold (4) is a pane that is held between the picking up pins (2) and retaining pins (6) equipped with springs (5) arranged on the upper side (O) of the frame (1).

6. Device according to claim 5, wherein the frame (1) has a side opening (8), through which the model mold (4) can be removed.

7. Device according to claim 3 or 4, wherein the model mold (4) is attached to the upper side (O) of the frame (1).

8. Device according to one of claims 3 through 6, wherein the upper side (O) and the lower side (U) of the frame (1) can be moved relative to one another, as a result of which the frame (1) can be opened to change the model mold (4).

9. Device according to one of claims 1 through 7, wherein the frame (1) is attached to a robot arm (10).

10. Method for picking up, shaping, and placing a thin glass pane, wherein a glass pane (I) with a thickness of less than 1 mm is brought into contact with the suction cups (3) of a device according to one of claims 1 through 9 and is raised and wherein the picking up pins (2) are moved such that the arrangement of the suction cups (3) is adapted to an intended shape of the glass pane (I) in order to shape the glass pane (I).

11. Method according to claim 10, wherein the glass pane (I) is first picked up with the suction cups (3) and the picking up pins (2) are subsequently moved, wherein the glass pane (I) is shaped.

12. Method according to claim 10, wherein the picking up pins (2) are first moved such that the arrangement of the suction cups (3) is adapted to the intended shape of the glass pane (I), and wherein the glass pane (I) is subsequently picked up with the suction cups (3) with a rolling movement, wherein the glass pane (I) is shaped.

13. Method according to one of claims 10 through 12, wherein the glass pane (I) is placed on a thermoplastic film (III) that is arranged on a second glass pane (II) with a thickness of at least 1.5 mm.

14. Method according to claim 13, wherein the second glass pane (II) is subsequently spot heated in order to melt the thermoplastic film (III) locally, as a result of which the glass pane (I) and the second glass pane (II) adhere locally to the thermoplastic film (III).

15. Method according to one of claims 10 through 14, wherein, at the time of placing, the glass pane (I) is separated from the suction cups (3) by means of compressed air.

## Revendications

1. Dispositif de préhension, de mise en forme et de mise en place d'une plaque de verre mince, comportant un châssis (1) avec une face supérieure (O) et une face inférieure (U), qui est apte à être orientée vers une plaque de verre (I) ayant une épaisseur inférieure à 1 mm et qui est munie d'une pluralité de broches de préhension (2), qui sont disposées sensiblement parallèlement entre elles et dont l'extrémité orientée vers la plaque de verre (I) est équipée d'une ventouse (3),
dans lequel les broches de préhension (2) sont déplaçables indépendamment les unes des autres le long de la direction dans laquelle elles s'étendent afin d'adapter l'agencement des ventouses (3) à une forme envisagée de la plaque de verre (I).

2. Dispositif selon la revendication 1, dans lequel les broches de préhension (2) sont munies de moteurs (7), au moyen desquels les broches de préhension (2) peuvent être déplacées le long de la direction dans laquelle elles s'étendent.

3. Dispositif selon la revendication 1, dans lequel les broches de préhension (2) sont munies de ressorts (5) et les extrémités des broches de préhension (2) tournées à l'opposé à la plaque de verre (I) sont en contact avec un moule modèle (4), ce par quoi les broches de préhension (2) sont maintenues à l'encontre de la force élastique des ressorts (5).

4. Dispositif selon la revendication 3, dans lequel toutes les broches de préhension (2) présentent sensiblement la même longueur et la forme du moule modèle (4) correspond sensiblement à la forme envisagée de la plaque de verre (I).

5. Dispositif selon l'une des revendications 3 et 4, dans lequel le moule modèle (4) est une plaque qui est maintenue entre les broches de préhension (2) et des broches de maintien (6) équipées de ressorts (5), disposées sur la face supérieure (O) du châssis (1).

6. Dispositif selon la revendication 5, dans lequel le châssis (1) présente une ouverture latérale (8), à travers laquelle le moule modèle (4) peut être retiré.

7. Dispositif selon l'une des revendications 3 et 4, dans lequel le moule modèle (4) est fixé sur la face supérieure (O) du châssis (1).

8. Dispositif selon l'une des revendications 3 à 6, dans lequel la face supérieure (O) et la face inférieure (U) du châssis (1) sont déplaçables l'une par rapport à l'autre, ce par quoi le châssis (1) peut être ouvert pour changer le moule modèle (4).

9. Dispositif selon l'une des revendications 1 à 7, dans lequel le châssis (1) est fixé à un bras de robot (10).

10. Procédé de préhension, de mise en forme et de mise en place d'une plaque de verre mince, dans lequel une plaque de verre (I) ayant une épaisseur inférieure à 1 mm est amenée en contact avec les ventouses (3) d'un dispositif selon l'une des revendications 1 à 9 et soulevée et dans lequel les broches de préhension (2) sont déplacées de telle sorte que l'agencement des ventouses (3) est adapté à une forme envisagée de la plaque de verre (I) afin de mettre en forme la plaque de verre (I).

11. Procédé selon la revendication 10, dans lequel la plaque de verre (I) est d'abord prise par les ventouses (3) et les broches de préhension (2) sont ensuite déplacées, à l'occasion de quoi la plaque de verre (I) est mise en forme.

12. Procédé selon la revendication 10, dans lequel les broches de préhension (2) sont d'abord déplacées de telle sorte que l'agencement des ventouses (3) est adapté à la forme envisagée de la plaque de verre (I), et dans lequel la plaque de verre (I) est ensuite prise par les ventouses (3) avec un mouvement de roulement, à l'occasion de quoi la plaque de verre (I) est mise en forme.

13. Procédé selon l'une des revendications 10 à 12, dans lequel la plaque de verre (I) est mise en place sur un film thermoplastique (III) qui est disposé sur une seconde plaque de verre (II) ayant une épaisseur d'au moins 1,5 mm.

14. Procédé selon la revendication 13, dans lequel la seconde plaque de verre (II) est ensuite chauffée par points afin de faire fondre localement le film thermoplastique (III), ce par quoi la plaque de verre (I) et la seconde plaque de verre (II) adhèrent localement au film thermoplastique (III).

15. Procédé selon l'une des revendications 10 à 14, dans lequel la plaque de verre (I) est séparée des ventouses (3) au moyen d'air comprimé lors de la mise en place.
